# EUROPÄISCHE PATENTANMELDUNG

(11) **EP 3 409 990 A1**
(43) Veröffentlichungstag der Anmeldung: **05.12.2018**
(21) Anmeldenummer: 17173686.1
(22) Anmeldetag: 31.05.2017
(51) Int. Cl.: F16L 5/04, A62C 2/06, H02G 3/04, E04B 1/94

(54) **BRANDSCHUTZELEMENT UND BRANDSCHUTZBANDGE**

(71) Anmelder: HILTI Aktiengesellschaft, 9494 Schaan (LI)
(72) Erfinder: Aubauer, Christoph, 88142 Wasserburg (DE); Berghofer, Egon, 86937 Scheuring (DE)
(74) Vertreter: Hilti Aktiengesellschaft Corporate Intellectual Property

(57) **Zusammenfassung**

Ein Brandschutzelement (10) umfasst eine Matte (12) aus intumeszierendem Material, eine Verstärkungseinlage (16) sowie Lüftungslöcher (14). Des Weiteren ist eine Brandschutzbandage mit einem solchen Brandschutzelement (10) vorgesehen.

## Beschreibung

Die Erfindung betrifft ein Brandschutzelement sowie eine Brandschutzbandage zur Abdichtung einer Kabel-Wand- oder Deckendurchführung, mit einem solchen Brandschutzelement.

Um eine Ausbreitung von Feuer und Rauch in Gebäuden zu verhindern, ist es bekannt, Leitungsdurchgänge mit nicht feuerfesten Rohren oder Kabeln in Decken oder Wänden mit einem Brandschott zu verschließen. Das Brandschott ist im Leitungsdurchgang um die Leitungen herum angeordnet und enthält üblicherweise ein intumeszierendes Material, das im Brandfall einen zuverlässigen Verschluss des Leitungsdurchgangs sicherstellt. Ablative oder mineralische Materialien können auch verwendet werden.

Ferner ist bekannt, die aus den Leitungsdurchgängen ragenden Leitungen mit Brandschutzelementen in Form von Brandschutzbandagen abzudecken, um die Temperatur auf der dem Feuer abgewandten Seite des Leitungsdurchgangs möglichst lange gering zu halten und hierdurch die Ausbreitung des Feuers zu verhindern bzw. zu verzögern.

Üblicherweise wird hierzu Mineralwolle verwendet. Diese hat jedoch die Nachteile, dass sie Fasern enthält und zur Staubbildung neigt. Somit ist Mineralwolle nicht für Orte geeignet, die möglichst frei von Staub und Fasern bleiben müssen, wie Reinräume oder Telekommunikationsanlagen.

Aufgabe der Erfindung ist es daher, ein verbessertes Brandschutzelement für Brandschutzbandagen bereitzustellen.

Zur Lösung der Aufgabe ist ein Brandschutzelement mit einer Matte aus intumeszierendem Material, einer Verstärkungseinlage sowie Lüftungslöchern vorgesehen. Die Verstärkungseinlage dient zur Stabilisierung der im Brandfall entstehenden Intumeszenz-Kruste und hilft zu verhindern, dass diese in Teilen vom Brandschutzelement abfällt. Die Lüftungslöcher sind Durchgangsöffnungen, die speziell für die Luftzirkulation vorgesehen sind. Insbesondere handelt es sich bei den Lüftungslöchern nicht um Kapillare oder ähnliche röhrenförmige Strukturen mit einem Durchmesser von wenigen Millimetern, wie sie beispielsweise in einem aufgeschäumten intumeszierenden Material vorkommen können. Mittels der Lüftungslöcher kann Luft durch das Brandschutzelement zirkulieren und Wärme abtransportieren. Auf diese Weise kann beispielsweise die Temperatur von Leitungen reduziert werden, die durch das Brandschutzelement abgedeckt sind, bzw. deren Temperaturzunahme verringert werden.

Das Brandschutzelement kann eine Oberseite und eine entgegengesetzt angeordnete Unterseite aufweisen. Hierbei erstrecken sich die Lüftungslöcher jeweils linear von der Oberseite zur Unterseite des Brandschutzelements. Durch diese Gestaltung wird der Strömungswiderstand reduziert, sodass die Luftzirkulation verbessert ist und mehr Wärme abtransportiert werden kann.

Die Verstärkungseinlage kann sich parallel zur Oberseite erstrecken, wodurch sie das Brandschutzelement gleichmäßig stabilisiert, insbesondere wenn sich die Verstärkungseinlage im Wesentlichen über bzw. durch das gesamte Brandschutzelement erstreckt.

Die Verstärkungseinlage kann durch ein Gitter oder ein Gewebe gebildet sein und aus Metall, Streckmetall, Glasfasern, Basaltfasern, Kohlenstofffasern oder Keramikfasern bestehen. Auch ein hybrider Aufbau der Verstärkungseinlage aus mehreren Materialien ist möglich. Die im Vergleich zum intumeszierendem Material höhere Temperaturbeständigkeit ist vorteilhaft, da so die Verstärkungseinlage von der das intumeszierende Material aktivierenden Temperatur nicht beeinträchtigt wird und auf diese Weise ihre stabilisierende Funktion ausüben kann.

Die Verstärkungseinlage kann flexibel sein, damit das Brandschutzelement leicht an verschiedene Oberflächen angepasst werden kann, sodass das Brandschutzelement dicht an der Oberfläche anliegt. Daher ist das Brandschutzelement insbesondere nicht biegesteif ausgeführt, um eine einfache Montage zu ermöglichen, bei der keine Werkzeuge zum Verformen des Brandschutzelements erforderlich sind. Eine geringe Elastizität der Verstärkungseinlage kann vorteilhaft sein, um die Montage zu erleichtern und Presspassungen zu ermöglichen sowie die Stabilität des Brandschutzelements zu verbessern.

Die Verstärkungseinlage kann in der äußeren Oberfläche des Brandschutzelements angeordnet sein bzw. zumindest abschnittsweise die Oberfläche einer Seite des Brandschutzelements bilden. Es ist vorteilhaft, die Verstärkungseinlage in der Oberfläche des Brandschutzelements zu positionieren, um die Außenflächen zu stabilisieren und auf diese Weise die im Brandfall entstehende Intumeszenz-Kruste länger am Brandschutzelement zu halten. Ferner lässt sich die Verstärkungseinlage auf diese Weise leichter bearbeiten, insbesondere durchtrennen, wodurch die Montage erleichtert wird.

Die Verstärkungseinlage kann in die Oberfläche des intumeszierenden Materials eingedrückt sein. Hierdurch ist das Brandschutzelement kostengünstig herstellbar.

Die Lüftungslöcher können einen Durchmesser zwischen 5 mm und 50 mm oder zwischen 8 mm und 15 mm aufweisen. Alternativ kann der Durchmesser der Lüftungslöcher 10 mm betragen. Vorzugsweise haben alle Lüftungslöcher den gleichen Durchmesser, um homogene Eigenschaften des Brandschutzelements zu gewährleisten und die Herstellungskosten zu reduzieren. Alternativ können auch Lüftungslöcher mit unterschiedlichen Durchmessern vorgesehen sein.

Das Brandschutzelement kann eine Lochdichte zwischen 100 und 5000 Lüftungslöcher/m² aufweisen. Alternativ kann die Lochdichte zwischen 500 und 3000 Lüftungslöcher/m² oder zwischen 1000 und 2000 Lüftungslöcher/m² betragen. Auf diese Weise kann eine gute Luftzirkulation sichergestellt werden.

Die Lüftungslöcher können im Wesentlichen homogen über das Brandschutzelement verteilt sein. Hierdurch wird eine gleichmäßig gute Eigenschaft zur Luftzirkulation gewährleistet sowie die Montage erleichtert, da das Brandschutzelement in verschiedenen Ausrichtungen mit gleichen Eigenschaften installiert werden kann.

Das Brandschutzelement kann in Form von Endlosmaterial bereitgestellt sein und weist vorzugsweise eine Dicke von 8 mm bis 15 mm, insbesondere von 10 mm auf. Das bedeutet, dass das Brandschutzelement als durchgehendes sehr langes Band, beispielsweise in Form einer Rolle, bereitgestellt wird. Dies hat den Vorteil, dass von dem Band je nach Bedarf Abschnitte mit der gewünschten Länge abgeschnitten werden können, sodass das Brandschutzelement ohne zusätzliches Zurechtschneiden in einem Stück installiert werden kann und damit anfallender Abfall minimiert wird.

Das intumeszierende Material kann mineralfaserfrei sein, wodurch es besonders für Einsatzorte geeignet ist, die frei von Staub und Fasern bleiben müssen, wie Reinräume oder Telekommunikationsanlagen.

Erfindungsgemäß ist zur Lösung der oben genannten Aufgabe auch eine Brandschutzbandage zur Abdichtung einer Kabel-Wand- oder Deckendurchführung, mit einem erfindungsgemäßen Brandschutzelement vorgesehen. Die Brandschutzbandage ist um ein Kabel und/oder eine Kabeltrasse wickelbar, wodurch die Außenseite der Kabel und/oder der Kabeltrasse abgedeckt werden können. Dabei erstrecken sich die Lüftungslöcher von der kabelseitigen Oberfläche innen bis zur umgebungsseitigen Oberfläche an der Außenseite der Brandschutzbandage. Auf diese Weise werden die Kabel bzw. die Kabeltrasse durch die Brandschutzbandage von der Umgebung isoliert. Gleichzeitig kann Luft durch die Lüftungslöcher strömen und Wärme von den Kabeln bzw. der Kabeltrasse abtransportieren.

Die Brandschutzbandage ist nicht auf die Verwendung mit Kabeln beschränkt. Anstelle von Kabeln, kann die Brandschutzbandage auch um andere Arten von Leitungen, wie Rohre, mit oder ohne Kabeltrasse gewickelt werden. Ferner kann die Brandschutzbandage auch um mehrere Leitungen und/oder Kabeltrassen gewickelt werden, insbesondere mit verschiedenen Arten von Leitungen.

Weitere Vorteile und Merkmale ergeben sich aus der nachfolgenden Beschreibung in Verbindung mit den beigefügten Zeichnungen. In diesen zeigen:
- Figur 1 in einer Draufsicht ein erfindungsgemäßes Brandschutzelement,
- Figur 2 in einer Seitenansicht das Brandschutzelement aus Figur1, und
- Figur 3 in einer perspektivischen Ansicht eine erfindungsgemäße Brandschutzbandage, die vor einem Brandschott um eine Kabeltrasse installiert ist.

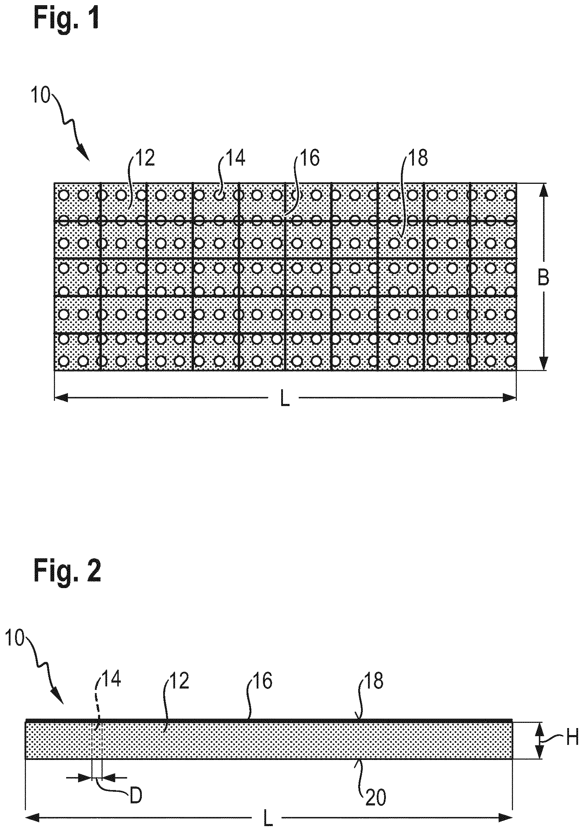

In Figur 1 ist ein Brandschutzelement 10 gezeigt, das eine Matte 12 mit einer Vielzahl an Lüftungslöchern 14 sowie eine Verstärkungseinlage 16 umfasst.

Das Brandschutzelement 10 ist quaderförmig und hat eine Länge L von 500 mm, eine Breite B von 150 mm und eine Dicke H von 10 mm (siehe Figur 2). Alternativ kann das Brandschutzelement 10 andere Formen und Abmessungen aufweisen. Insbesondere kann die Breite B zwischen 50 mm und 500 mm und/oder die Dicke H zwischen 8 mm und 15 mm betragen. Ferner kann das Brandschutzelement 10 als Endlosmaterial vorgesehen sein, insbesondere als sehr langes Band in Form einer Rolle, wodurch die mögliche Länge L im Wesentlichen nur durch die Länge des Bandes begrenzt ist.

Die Seiten des Brandschutzelements 10, die sich entlang der Länge L und der Breite B erstrecken, bilden eine Oberseite 18 und eine entgegengesetzte Unterseite 20.

Die Matte 12 besteht zumindest teilweise aus einem intumeszierenden Material und ist im Wesentlichen faserfrei. Insbesondere weist die Matte 12 keine Mineralfasern auf.

Die Verstärkungseinlage 16 ist ein Gitter aus Metalldraht. Alternativ kann die Verstärkungseinlage 16 durch ein Gitter oder ein Gewebe aus Metall, Streckmetall, Glasfasern, Basaltfasern, Kohlenstofffasern oder Keramikfasern gebildet sein. Auch ein hybrider Aufbau der Verstärkungseinlage 16 aus mehreren Materialien ist möglich. Jedoch sind Materialien bevorzugt, die faserfrei sind bzw. keine ungebundenen Fasern aufweisen und somit besonders gut für Reinräume geeignet sind, die nicht durch freie Fasern kontaminiert werden dürfen.

Die Oberseite 18 wird durch die Verstärkungseinlage 16 gebildet, die sich parallel zur Oberfläche der Matte 12 erstreckt. Die Verstärkungseinlage 16 liegt dicht an der Matte 12 an und ist beispielsweise mittels eines Klebstoffs an der Matte 12 befestigt. Zusätzlich oder alternativ kann die Verstärkungseinlage 16 in die Oberfläche der Matte 12 eingedrückt oder ganz oder teilweise in dieser angeordnet sein. Insbesondere kann die Verstärkungseinlage 16 direkt bei der Herstellung der Matte 12 in diese eingebracht werden.

Die Verstärkungseinlage 16 erstreckt sich im Wesentlichen über die gesamte Breite B und Länge L des Brandschutzelements 10. Alternativ kann die Verstärkungseinlage 16 breiter als die Breite B ausgeführt sein und damit einseitig oder beidseitig einen Überstand bilden (nicht dargestellt), der beispielsweise bei der Montage zum Befestigen des Brandschutzelements 10 verwendet werden kann oder der über die Seiten des Brandschutzelements 10 gebogen wird, um diese insbesondere im Brandfall zu stabilisieren.

Die Lüftungslöcher 14 haben jeweils einen Durchmesser D von 10 mm und sind in Form eines äquidistanten Gitters über das Brandschutzelement 10 verteilt angeordnet. Alternativ können die Lüftungslöcher 14 einen Durchmesser D zwischen 5 mm und 50 mm oder vorzugsweise zwischen 8 mm und 15 mm aufweisen. Ferner können Lüftungslöcher 14 mit unterschiedlichen Durchmessern D vorgesehen sein. In einer alternativen Ausführungsform können die Lüftungslöcher 14 beliebig über das Brandschutzelement 10 verteilt angeordnet sein, wobei eine homogene Verteilung vorteilhaft ist, um gleichmäßige Eigenschaften über das gesamte Brandschutzelement 10 zu gewährleisten.

Die Matte 12 weist eine Lochdichte von ca. 2500 Lüftungslöchern/m² auf. Alternativ kann die Lochdichte zwischen 100 und 5000 Lüftungslöcher/m², vorzugsweise zwischen 500 und 3000 Lüftungslöcher/m², bevorzugt zwischen 1000 und 2000 Lüftungslöcher/m² betragen.

Die Lüftungslöcher 14 erstrecken sich linear von der Oberseite 18 zur Unterseite 20 durch das Brandschutzelement 10 (siehe Figur 2). Hierzu können spezielle Öffnungen in der Verstärkungseinlage 16 vorgesehen sein, insbesondere wenn die Verstärkungseinlage 16 eine Maschenweite aufweist, die kleiner ist als der Durchmesser D der Lüftungslöcher 14, oder die Verstärkungseinlage 16 einen Großteil, beispielsweise mehr als 50%, der Querschnittsfläche aller Lüftungslöcher 14 bedeckt. Somit ist sichergestellt, dass genügend Lüftungslöcher 14 einen im Wesentlichen über die gesamte Dicke H freien Querschnitt bereitstellen, um eine ausreichende Luftzirkulation für den Wärmetransport zu gewährleisten. Wie in Figur 1 zu sehen ist, kann ein Teil der Querschnittsfläche eines kleinen Teils der Lüftungslöcher 14 von der Verstärkungseinlage 16 verdeckt sein, ohne dass hierdurch die Luftzirkulation des Brandschutzelements 10 wesentlich beeinträchtigt ist.

Ferner haben die Lüftungslöcher 14 einen kreisförmigen Querschnitt und sind hierdurch besonders kostengünstig herstellbar. Alternativ können die Lüftungslöcher 14 einen beliebigen Querschnitt, insbesondere auch einen sich über die Dicke H verändernden Querschnitt aufweisen.

Die Lüftungslöcher 14 erstrecken sich senkrecht zur Oberseite 18 durch die Matte 12 und bilden aufgrund ihres kreisförmigen Querschnitts ein kreiszylinderförmiges Durchgangsloch. Alternativ können sich zumindest ein Teil der Lüftungslöcher 14 unter einem Winkel durch die Matte 12 erstrecken, der von 90° abweicht. Hierbei bilden die Lüftungslöcher 14 entsprechend ihres Querschnitts Durchgangslöcher in Form von allgemeinen oder schiefen Zylindern bzw. Prismen.

Das Brandschutzelement 10 ist nicht biegesteif ausgeführt. Das heißt, sowohl die Matte 12 als auch die Verstärkungseinlage 16 sind zumindest abschnittsweise flexibel, sodass das Brandschutzelement 10 an unebene Oberflächen angepasst werden kann. Somit kann das Brandschutzelement 10 beispielsweise dicht anliegend um eine oder mehrere Leitungen bzw. um eine Kabeltrasse gewickelt werden. Das Brandschutzelement 10 ist insbesondere derart flexibel, dass das Verformen werkzeugfrei erfolgen kann und/oder die erforderlichen Kräfte von einem durchschnittlich kräftigen Menschen ohne Mühe aufgebracht werden können.

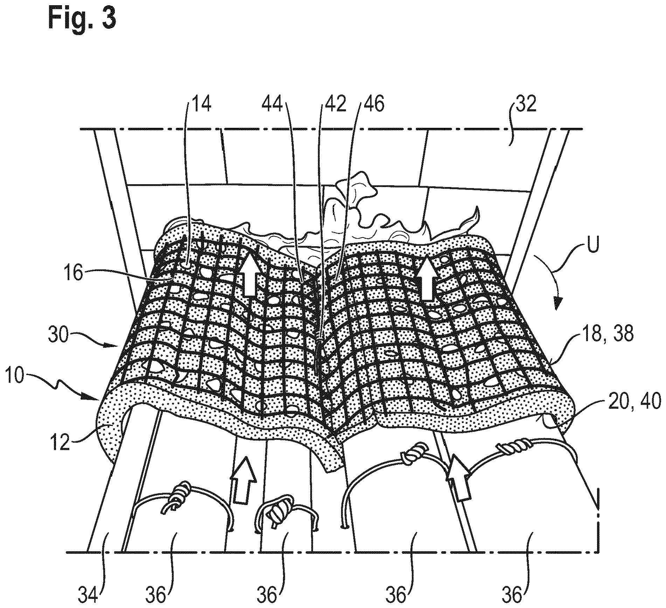

In Figur 3 ist das Brandschutzelement 10 als Teil einer erfindungsgemäßen Brandschutzbandage 30 gezeigt, die angrenzend an ein Brandschott 32 um eine Kabeltrasse 34 mit vier Kabeln 36 gewickelt ist, welche sich durch das Brandschott 32 erstrecken. Das Brandschott 32 ist Teil einer Kabel-Wanddurchführung.

Um die Brandschutzbandage 30 zu montieren, wird ein entsprechend langes Stück Brandschutzelement 10 in Umfangsrichtung U eng um die Kabeltrasse 34 inklusive der Kabel 36 gewickelt. Aufgrund seiner Flexibilität, kann das Brandschutzelement 10 an die Form der Kabeltrasse 34 und der Kabel 36 angepasst werden, sodass das Brandschutzelement 10 zumindest abschnittsweise an der Kabeltrasse 34 und den Kabeln 36 anliegt.

Hierbei wird das Brandschutzelement 10 derart angeordnet, dass die Oberseite 18 die außenliegende umgebungsseitige Oberfläche 38 der Brandschutzbandage 30 und die Unterseite 20 die innenliegende kabelseitige Oberfläche 40 der Brandschutzbandage 30 bildet. Somit erstrecken sich die Lüftungslöcher 14 von der Unterseite 20, die der Kabeltrasse 34 und den Kabeln 36 gegenüberliegt, bis zur entgegengesetzten Oberseite 18, die an die Umgebung angrenzt.

Die Verstärkungseinlage 16 bildet in dieser Ausführungsform die außenliegende Oberfläche 38 der Brandschutzbandage 30 und ist daher besonders gut geeignet, die im Brandfall entstehende Intumeszenz-Kruste zu stabilisieren und davon abzuhalten, in Teilen von der Brandschutzbandage 30 abzufallen.

Die Enden 44, 46 des Brandschutzelements 10 sind mittels eines Befestigungsmittels 42 miteinander verbunden, um die Brandschutzbandage 30 sicher an der Kabeltrasse 34 zu befestigen. Das Befestigungsmittel 42 ist ein verdrilltes Drahtstück, das sich durch die Verstärkungseinlage 16 der beiden Enden 44, 46 erstreckt. Zusätzlich oder alternativ können auch Klemmen oder Schellen zur Befestigung vorgesehen sein.

Vorzugsweise wird auf beiden Seiten des Brandschotts 32 eine Brandschutzbandgage 30 installiert.

Im Brandfall wird die Umgebung auf der feuerabgewandten Seite des Brandschotts 32 durch die Brandschutzbandage 30 von den sich erhitzenden Kabeln 36 isoliert. Ferner kann Luft durch die Lüftungslöcher 14 strömen und auf diese Weise Wärme von den Kabeln 36 bzw. der Kabeltrasse 34 abtransportieren (die zirkulierende Luft ist in Figur 3 durch Pfeile dargestellt). Hierdurch kann deren Temperatur länger unter einem Grenzwert gehalten werden und das Risiko ist reduziert, dass sich das Feuer weiter ausbreitet.

Im Gegensatz zu Mineralwolle haben das erfindungsgemäße Brandschutzelement sowie die erfindungsgemäße Brandschutzbandage ferner den Vorteil, dass sie im Wesentlichen faserfrei sind und nicht zur Staubbildung neigen. Somit sind das Brandschutzelement sowie die Brandschutzbandage insbesondere für Orte geeignet, die möglichst frei von Staub und Fasern bleiben müssen, wie Reinräume oder Telekommunikationsanlagen.

## Patentansprüche

1. Brandschutzelement (10) mit einer Matte (12) aus intumeszierendem Material und einer Verstärkungseinlage (16), **dadurch gekennzeichnet, dass** das Brandschutzelement (10) Lüftungslöcher (14) aufweist.

2. Brandschutzelement nach Anspruch 1, **dadurch gekennzeichnet, dass** das Brandschutzelement (10) eine Oberseite (18) und eine entgegengesetzt angeordnete Unterseite (20) aufweist, wobei sich die Lüftungslöcher (14) jeweils linear von der Oberseite (18) zur Unterseite (20) erstrecken.

3. Brandschutzelement nach Anspruch 2, **dadurch gekennzeichnet, dass** sich die Verstärkungseinlage (16) parallel zur Oberseite (18) erstreckt.

4. Brandschutzelement nach einem der vorhergehenden Ansprüche, **dadurch gekennzeichnet, dass** die Verstärkungseinlage (16) durch ein Gitter oder ein Gewebe gebildet ist und aus Metall, Streckmetall, Glasfasern, Basaltfasern, Kohlenstofffasern oder Keramikfasern besteht.

5. Brandschutzelement nach einem der vorhergehenden Ansprüche, **dadurch gekennzeichnet, dass** die Verstärkungseinlage (16) flexibel ist und insbesondere nicht biegesteif ausgeführt ist.

6. Brandschutzelement nach einem der vorhergehenden Ansprüche, **dadurch gekennzeichnet, dass** die Verstärkungseinlage (16) in der äußeren Oberfläche (18) des Brandschutzelements (10) angeordnet ist.

7. Brandschutzelement nach Anspruch 6, **dadurch gekennzeichnet, dass** die Verstärkungseinlage (16) in die Oberfläche des intumeszierenden Materials eingedrückt ist.

8. Brandschutzelement nach einem der vorhergehenden Ansprüche, **dadurch gekennzeichnet, dass** die Lüftungslöcher (14) einen Durchmesser (D) zwischen 5 mm und 50 mm, vorzugsweise zwischen 8 mm und 15 mm, bevorzugt 10 mm aufweisen.

9. Brandschutzelement nach einem der vorhergehenden Ansprüche, **dadurch gekennzeichnet, dass** das Brandschutzelement (10) eine Lochdichte zwischen 100 und 5000 Lüftungslöcher/m², vorzugsweise zwischen 500 und 3000 Lüftungslöcher/m², bevorzugt zwischen 1000 und 2000 Lüftungslöcher/m² aufweist.

10. Brandschutzelement nach einem der vorhergehenden Ansprüche, **dadurch gekennzeichnet, dass** die Lüftungslöcher (14) im Wesentlichen homogen über das Brandschutzelement (10) verteilt sind.

11. Brandschutzelement nach einem der vorhergehenden Ansprüche, **dadurch gekennzeichnet, dass** das Brandschutzelement (10) als Endlosmaterial ausgebildet ist und vorzugsweise eine Dicke (H) von 8 mm bis 15 mm, bevorzugt von 10 mm aufweist.

12. Brandschutzelement nach einem der vorhergehenden Ansprüche, **dadurch gekennzeichnet, dass** das intumeszierende Material mineralfaserfrei ist.

13. Brandschutzbandage (30) zur Abdichtung einer Kabel-Wand- oder Deckendurchführung, mit einem Brandschutzelement (10) nach einem der vorhergehenden Ansprüche, die um ein Kabel (36) und/oder eine Kabeltrasse (34) wickelbar ist, um die Außenseite der Kabel (36) und/oder der Kabeltrasse (34) abzudecken, wobei sich die Lüftungslöcher (14) von der kabelseitigen Oberfläche (40) bis zur umgebungsseitigen Oberfläche (38) erstrecken.
